# EUROPEAN PATENT SPECIFICATION

(11) **EP 1 906 233 B1**
(45) Date of publication and mention of the grant of the patent: **29.07.2009**
(21) Application number: 07018952.7
(22) Date of filing: 26.09.2007
(51) Int. Cl.: G03B 17/02, H04N 5/232

(54) **Imaging device**
Abbildungsvorrichtung
Dispositif d'imagerie

(30) Priority: 29.09.2006 JP 2006268723
(43) Date of publication of application: 02.04.2008
(73) Proprietor: Fujinon Corporation, Saitama-shi, Saitama (JP)
(72) Inventor: Suzuki, Yusuke, Saitama-shi Saitama (JP)
(74) Representative: Klunker . Schmitt-Nilson . Hirsch

(56) References cited:
- JP-A- 2001 194 696
- JP-A- 2005 309 209
- US-A- 5 835 799
- US-A- 6 011 927
- US-A- 6 046 768

## Description

### BACKGROUND OF THE INVENTION

### 1. Technical Field

The invention relates to an imaging device used in shooting.

### 2. Description of the Related Art

JP Hei.10-39350 A discloses an imaging device which has a function of compensating camera shake during shooting, for use in a camera, a video camera and a camera installed in a cellular phone and which can perform zooming and focusing. This imaging device performs zooming and focusing by integrally moving the imaging optical system and the camera shake compensation mechanism in the optical axis direction. A similar device is disclosed in US 6,011,927.
[Patent Literature 1] JP Hei.10-39350 A
[Patent Literature 2] JP 2005-309209 A
[Patent Document 3] JP 2005-331399 A (corresponding to US 7,132,824)

However, in this imaging device, since the imaging optical system and the camera shake compensation mechanism are moved integrally in the optical axis direction, it is necessary to provide a clearance through which these components are moved in the imaging device. For this reason, it is difficult to sufficiently reduce in size the imaging device that has the camera shake compensation mechanism and can perform zooming and focusing. In particular, in the imaging device installed into the cellular phone, it is desired that a size should be reduced as small as possible.

### SUMMARY OF THE INVENTION

The invention has been made in view of the above circumstances and provides an imaging device which is able to achieve a size reduction, which has a camera shake compensation mechanism and which can perform zooming and focusing.

According to an aspect of the invention, it is provided an imaging device for making camera shake compensation as defined in claim 1.

In this configuration, a third actuator that relatively moves the imaging optical system in the optical axis direction with respect to a moving member, which is moved in the first direction and the second direction, is provided. Thereby, it becomes possible to move the imaging optical system in the optical axis direction in a state where the camera shake compensation mechanism is not moved in the optical axis direction. Therefore, in comparison with the case where both the camera shake compensation mechanism and the imaging optical system are moved simultaneously in the optical axis direction in performing zooming or focusing, a size of the components which are moved in the optical axis direction can be reduced, and a clearance provided in the imaging device can be reduced in size. As a result, a size reduction of the overall imaging device can be achieved.

Also, in the imaging device, the first actuator and the second actuator may be disposed to form a T shape.

With this configuration, the first actuator and the second actuator are disposed to form the T shape. Thereby, driving portions of the first actuator and the second actuator can be disposed closely, and the members can be configured to be small in size. As a result, a size reduction of the imaging device can be achieved.

Also, in the imaging device, each of the first actuator, the second actuator, and third actuator may move a shaft member reciprocally by an action of a piezoelectric element.

With this configuration, the third actuator that relatively moves the imaging optical system in the optical axis direction with respect to the moving member, which is moved in the first direction and the second direction, is provided. Thereby, a size reduction of the imaging device that has the camera shake compensation mechanism and is capable of performing zooming and focusing can be attained.

### BRIEF DESCRIPTION OF THE DRAWINGS

Fig. 1 is an exploded perspective view showing an imaging portion, a camera shake compensation mechanism, and a zooming mechanism of an imaging device according to an embodiment of the invention.
Fig. 2 is a plan view of the imaging portion, the camera shake compensation mechanism, and the zooming mechanism of the imaging device in Fig. 1.
Fig. 3 is a section view taken along III-III in Fig. 2.
Fig. 4 is a section view taken along IV-IV in Fig. 2.
Fig. 5 is an explanatory view explaining a comparison between the imaging device in Fig. 1 and a comparative example.

### DETAILED DESCRIPTION OF EMBODIMENTS OF THE INVENTION

An embodiment of the invention will be described below with reference to the accompanying drawings. Like reference symbols will be affixed to like elements in the description of the drawings, and their redundant explanation will be omitted.

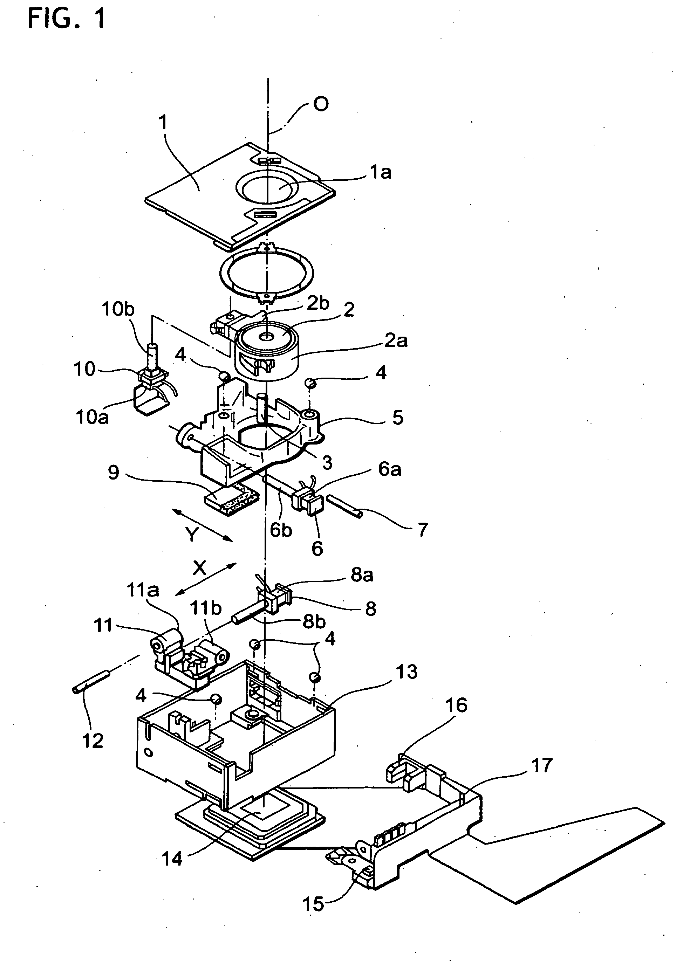

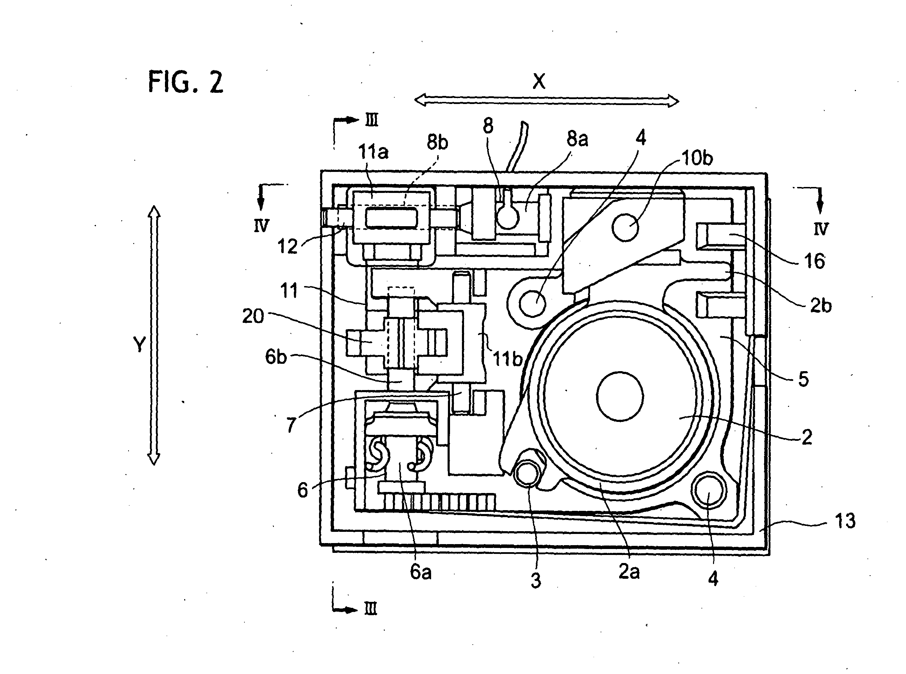

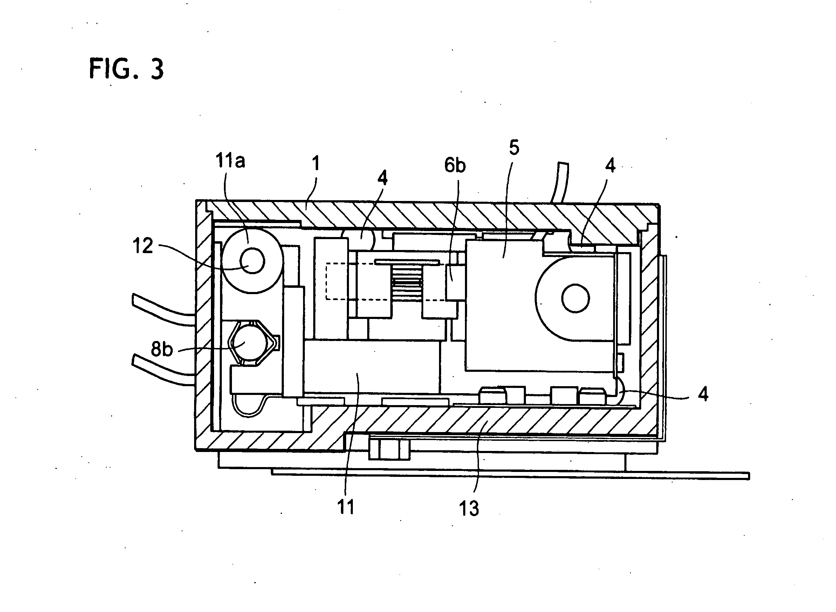

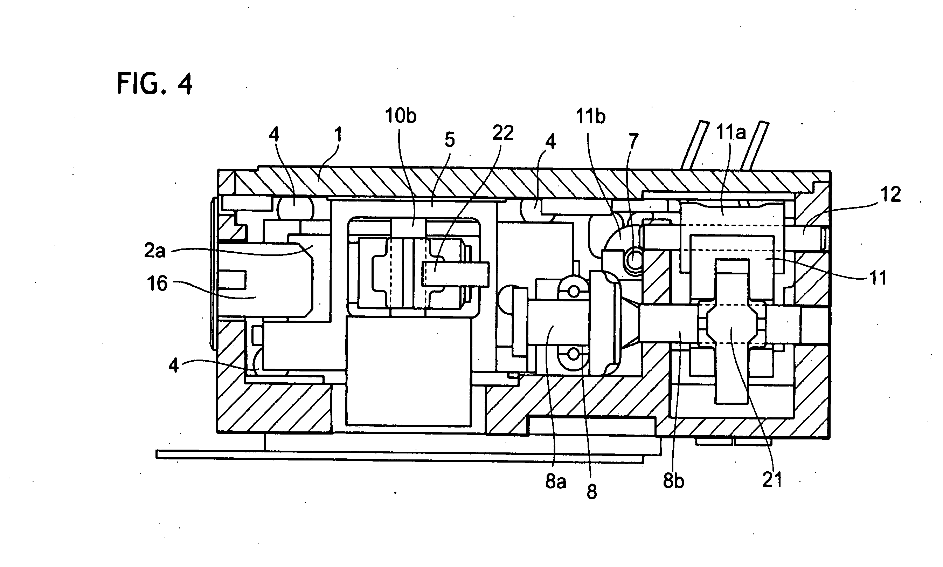

Fig. 1 is an exploded perspective view showing an imaging portion, a camera-shake compensation mechanism and a zooming mechanism of an imaging device according to an embodiment of the invention. Fig. 2 is a plan view of the imaging portion, the camera-shake compensation mechanism and the zooming mechanism of the imaging device in Fig. 1. Fig. 3 is a section view taken along III-III in Fig. 2. Fig. 4 is a section view taken along IV-IV in Fig. 2.

The imaging device according to this embodiment makes camera shake compensation by relatively moving an imaging optical system and an imaging element in directions perpendicular to an optical axis direction. In other words, the camera shake is compensated by moving the imaging optical system in response to the camera shake to change a relative position of the imaging optical system with respect to the imaging element. Furthermore, the imaging device performs zooming or focusing. This imaging device is applied to an imaging portion installed into a camera, a video camera, a cellular phone and the like.

First, a configuration of the imaging device will be described below. As shown in Fig. 1, the imaging device according to this embodiment includes an imaging optical system 2 and an imaging element 14 for obtaining an image of a subject. The imaging optical system 2 is an optical system that converges light to the imaging element 14, and has an imaging lens. This imaging optical system 2 is configured by fitting a lens (not shown) in a holder 2a, for example. The imaging optical system 2 may be formed of a single lens or may be formed of a lens group including a plurality of lenses.

The imaging optical system 2 is attached to a moving member 5. The imaging optical system 2 is provided to be relatively movable with respect to the imaging element 14 in a direction perpendicular to a direction of an optical axis O (optical axis direction). The moving member 5 is housed in an imaging element holder 13, which fixes the imaging element 14. Since the moving member 5 is supported by spherical bodies 4, the moving member 5 is movable relatively to the imaging element holder 13 and the imaging element 14 in the directions perpendicular to the optical axis direction. Therefore, when the imaging optical system 2 is moved together with the moving member 5, the imaging optical system 2 is also moved relatively to the imaging element 14 in the directions perpendicular to the optical axis direction.

Preferably the imaging optical system 2 is attached to the moving member 5 so as to be movable in the optical axis direction. For example, a third supporting shaft 3 directed in the optical axis direction is attached to the moving member 5 and the imaging optical system 2 is attached so as to be movable along the third supporting shaft 3. As an actuator 10 for moving the imaging optical system 2 in the optical axis direction, an actuator having a driving shaft 10b that reciprocally moves together with expansion and contraction of a piezoelectric element 10a is used. This actuator 10 acts as a third actuator that moves the imaging optical system 2 in the optical axis direction. The piezoelectric element 10a is attached to the moving member 5, and the driving shaft 10b frictionally engages with the imaging optical system 2 via a frictionally engaging portion 22 (see Fig. 4). One end of the driving shaft 10b abuts against the piezoelectric element 10a and is adhered thereto with an adhesive, for example. The driving shaft 10b is a longitudinal member, and a cylindrical one is used, for example.

As a frictionally engaging structure, for example, the following structure may be employed. That is, a plate spring brings the driving shaft 10b into a state where the driving shaft 10b is in pressure-contact with the holder 2a of the imaging optical system 2 under a constant pressing force, and when the driving axis 10b moves, a constant fictional force is caused. When the driving shaft 10b is moved with exceeding this frictional force, a position of the imaging optical system 2 is maintained as it is by the inertia. In contrast, when the driving shaft 10b is moved in the opposite direction without exceeding this frictional force, the imaging optical system 2 is also moved in that opposite direction. The imaging optical system 2 can be moved relatively to the moving member 5 by repeating such reciprocal movement of the driving shaft 10b. An electric signal for differentiating an expansion rate and a contraction rate is input into the piezoelectric element 10a from a control section (not shown). Thereby, the driving shaft 10b moves reciprocally at different rates, so that movement control of the imaging optical system 2 can be carried out.

In this manner, by attaching the imaging optical system 2 to the moving member 5 so as to be movable in the optical axis direction, only the imaging optical system 2 can be moved in the optical axis direction relatively to the moving member 5 to perform zooming or focusing. Therefore, it is not necessary that zooming or focusing is performed by moving the overall camera-shake compensation mechanism. As a result, components that are moved in zooming or focusing become small in size, and a clearance provided in the imaging device can be made small. Thus, the overall imaging device can be made small.

The imaging element 14 is an imaging means that converts an image formed by the imaging optical system 2 into an electric signal, and is fixedly attached to the imaging element holder 13. As the imaging element 14, for example, a CCD sensor is employed.

The imaging device according to this embodiment includes a first actuator 8 and a second actuator 6. The first actuator 8 is an actuator that relatively moves the imaging optical system 2 and the imaging element 14 in a first direction (pitch direction) X perpendicular to the optical axis direction. As this first actuator 8, for example, an actuator having a driving shaft 8b that reciprocally moves together with expansion and contraction of a piezoelectric element 8a is used. The driving shaft 8b is disposed to be directed to the first direction X. The piezoelectric element 8a is attached to the imaging element holder 13 to which the imaging element 14 is fixed. The driving shaft 8b frictionally engages with a slide member 11 via a frictionally engaging portion 21 (see Fig. 4). One end of the driving shaft 8b abuts against the piezoelectric element 8a and is adhered thereto with an adhesive, for example. The driving shaft 8b is a longitudinal member, and a cylindrical one is used, for example.

As a frictionally engaging structure, for example, the following structure may be employed. That is, a plate spring brings the driving shaft 8b into a state where the driving shaft 8b is in pressure-contact with the slide member 11 under a constant pressing force, and when the driving axis 8b moves, a constant fictional force is caused. When the driving shaft 8b is moved with exceeding this frictional force, a position of the slide member 11 is maintained as it is by the inertia. In contrast, when the driving shaft 8b is moved in the opposite direction without exceeding this frictional force, the slide member 11 is also moved in that opposite direction. By repeating such reciprocal movement of the driving shaft 8b, the slide member 11 can be moved in the first direction X with respect to the imaging element 14 and the imaging optical system 2 can be moved in the first direction relatively to the imaging element 14. An electric signal for differentiating an expansion rate and a contraction rate is input into the piezoelectric element 8a from the control section (not shown). Thereby, the driving shaft 8b moves reciprocally at different rates, so that movement control of the imaging optical system 2 can be carried out.

In some cases, the first actuator 8 may be configured by attaching the piezoelectric element 8a on the slide-member side and frictionally engaging the driving shaft 8b with the imaging element holder 13.

The second actuator 6 is an actuator that relatively moves the imaging optical system 2 and the imaging element 14 in a second direction (yaw direction) Y perpendicular to the optical axis direction. This second direction Y is perpendicular to the optical axis direction and intersects the first direction X. For example, the second direction Y is set to a direction perpendicular to the first direction X. As this second actuator 6, for example, an actuator having a driving shaft 6b that reciprocally moves together with expansion and contraction of a piezoelectric element 6a is used. The driving shaft 6b is disposed to be directed to the second direction Y. The piezoelectric element 6a is attached to the moving member 5. The driving shaft 6b frictionally engages with the slide member 11 via a frictionally engaging portion 20 (see Fig. 2). One end of the driving shaft 6b abuts against the piezoelectric element 6a and is adhered thereto with an adhesive, for example. The driving shaft 6b is a longitudinal member, and a cylindrical one is used, for example.

As a frictionally engaging structure, for example, the following structure may be employed. That is, a plate spring brings the driving shaft 6b into a state where the driving shaft 6b is in pressure-contact with the slide member 11 under a constant pressing force, and when the driving axis 6b moves, a constant fictional force is caused. When the driving shaft 6b is moved with exceeding this frictional force, a position of the moving member 5 is maintained as it is by the inertia. In contrast, when the driving shaft 6b is to be moved in one direction without exceeding this frictional force, the moving member 5 is also moved in one direction while the driving shaft 6b stands still because of the frictional force. By repeating such reciprocal movement of the driving shaft 6b, the moving member 5 can be moved in the second direction Y with respect to the imaging element 14 and the imaging optical system 2 can be moved in the second direction Y relatively to the imaging element 14. An electric signal for differentiating an expansion rate and a contraction rate is input into the piezoelectric element 6a from the control section (not shown). Thereby, the driving shaft 6b moves reciprocally at different rates, so that movement control of the imaging optical system 2 can be carried out.

The second actuator 6 is attached to the slide member 11 via the frictional engagement. Therefore, when the slide member 11 is moved in the first direction X by an action of the first actuator 8, the second actuator 6 is also moved in the first direction X.

In some cases, the second actuator 6 may be configured by attaching the piezoelectric element 6a on the slide-member side and frictionally engaging the driving shaft 6b with the moving member 5.

A position sensing magnet 9 and a Hall element 15 are provided in the imaging device. The position sensing magnet 9 is a magnet attached to the moving member 5. Any magnet may be used if such magnet can generate a magnetic field enough for the Hall element 15 to sense. The Hall element 15 is a magnetic sensor that senses relative positions of the imaging element 14 and the imaging optical system 2 with respect to the direction perpendicular to the optical axis direction, based on a status of the magnetic field generated from the position sensing magnet 9. The Hall element 15 is attached to a substrate 17, for example. The substrate 17 is a wiring board attached to the imaging element holder 13, and is bent like an L-shape, for example, in use. Lead wires of the piezoelectric elements 6a, 8a, 10a are attached to the substrate 17.

A photo interrupter 16 is provided in the imaging device. The photo interrupter 16 is a position sensor for sensing a position of the imaging optical system 2. The photo interrupter 16 is attached to the substrate 17 and disposed in a position in vicinity of the imaging optical system 2. The photo interrupter 16 has a light emitting portion and a light receiving portion. Through position sensing of a moving piece 2b that passes through a space between the light emitting portion and the light receiving portion, the photo interrupter 16 senses a position of the imaging optical system 2 in the optical axis direction. The moving piece 2b is a member that is formed in the holder 2a of the imaging optical system 2 and is moved together with the imaging optical system 2.

The imaging device has an upper cover 1. This upper cover 1 is a cover for covering an opening portion of the imaging element holder 13 into which the imaging portion and the camera-shake compensation mechanism are housed. The upper cover 1 has an opening portion 1a on which the image of the subject is incident.

As shown in Fig. 2, the slide member 11 is supported by a first supporting shaft 12 so that this slide member 11 is movable along the first direction X. The first supporting shaft 12 is a shaft member disposed along the first direction X, and is attached to the imaging element holder 13. This first supporting shaft 12 is provided to pass through a bearing portion 11a of the slide member 11. Thereby, the slide member 11 is supported by the first supporting shaft 12 so that the slide member 11 is moved with respect to the imaging element 14 only in the first direction X.

The first supporting shaft 12 is disposed on the first-actuator side of the imaging optical system 2. In other words, the first supporting shaft 12 is not disposed on the opposite side to the first actuator 8 across the imaging optical system 2, but is disposed on the first-actuator side. As a result, a moving mechanism using the first actuator 8 and a supporting mechanism using the first supporting shaft 12 can be integrated and configured compactly.

The moving member 5 is supported by a second supporting shaft 7 so that the moving member 5 is movable along the second direction Y. The second supporting shaft 7 is a shaft member disposed along the second direction Y, and is attached to the moving member 5. The second supporting shaft 7 is provided to pass through a bearing portion 11b of the slide member 11. Therefore, the moving member 5 is supported by the second supporting shaft 7 so that the moving member 5 is moved with respect to the slide member 11 only in the second direction Y.

The second supporting shaft 7 is disposed on the second-actuator side of the imaging optical system 2. In other words, the second supporting shaft 7 is not disposed on the opposite side to the second actuator 6 across the imaging optical system 2, but is disposed on the second actuator 6 side. As a result, a moving mechanism using the second actuator 6 and a supporting mechanism using the second supporting shaft 7 can be integrated and configured compactly.

The first actuator 8 and the second actuator 6 are disposed to form a T shape. In other words, the first actuator 8 and the second actuator 6 are disposed so that a front end portion of one member is directed to an intermediate portion of the other member to form the T shape. For example, the first actuator 8 and the second actuator 6 are combined so that a front end portion of the second actuator 6 is directed to an intermediate portion of the first actuator 8 to form the T shape.

Thereby, the driving shafts 8b, 6b of the first actuator 8 and the second actuator 6 can be disposed closely to each other. Therefore, the slide member 11 that engages with both the driving shaft 8b and the driving shaft 6b can be configured to be small in size. As a result, a size reduction of the imaging device can be attained.

The term "T shape" contains not only the case where the first actuator 8 and the second actuator 6 are combined to form a perfect T shape, but also the case where the first actuator 8 and the second actuator 6 are combined to form a substantial T shape. For example, in the case where a front end portion of one of the first actuator 8 and the second actuator 6 is directed to an intermediate portion of the other, there may be a predetermined clearance between the intermediate portion and the front end portion or the front end portion may be directed to a position that gets out of a center of the intermediate portion. In the both events, the slide member 11 that engages with both the first actuator 8 and the second actuator 6 can be configured to be small in size, and thus a size reduction of the imaging device can be attained.

Next, a basic operation of the imaging device according to this embodiment will be described below.

In Fig. 1, when camera shake is caused during shooting with the imaging device, a camera-shake sensor (not shown) such as an inertia sensor senses the camera shake. Then, driving signals are output from the control section (not shown) to the first actuator 8 and the second actuator 6 to prevent an image captured by the imaging element 14 from being blurred.

The driving signals for differentiating an expansion rate and a contraction rate of the piezoelectric elements 8a, 6a are input into the first actuator 8 and the second actuator 6. Thus, the driving shafts 8b, 6b are reciprocally moved repeatedly. The slide member 11 is moved with respect to the imaging element 14 in the first direction X by an action of the first actuator 8. The imaging optical system 2 and the moving member 5 are moved with respect to the slide member 11 in the second direction Y by an action of the second actuator 6. Therefore, the imaging optical system 2 is moved relatively to the imaging element 14.

As a result, even though the camera shake of the imaging device is caused, relative movements of the imaging optical system 2 and the imaging element 14 are controlled. Thus, blurring of the image captured by the imaging element 14 can be suppressed.

In performing zooming or focusing, a driving signal is output to the third actuator 10 from the control portion (not shown) to cause the imaging element 14 to change a shooting angle.

A driving signal for differentiating an expansion rate and a contraction rate of the piezoelectric element 10a is input into the third actuator 10. Accordingly, the driving shaft 10b moves reciprocally repeatedly. The imaging optical system 2 is moved in the optical axis direction with respect to the moving member 5 by an action of the third actuator 10. Thus, the imaging element 14 and the imaging optical system 2 are moved relatively.

As a result, the imaging element 14 and the imaging optical system 2 are moved/controlled relatively in the optical axis direction, to thereby perform zooming or focusing.

As explained above, according to this embodiment, the imaging device is configured so that the third actuator 10 is provided for the moving member 5. With this configuration, the slide member 11 and the moving member 5 are not moved in the optical axis direction, but only the imaging optical system 2 is moved in the optical axis direction, to perform zooming or focusing. Therefore, a size of the components that are moved in the optical axis direction when zooming or focusing is performed can be reduced. Also, a clearance in the imaging device can be made small in size. As a result, the overall imaging device can be reduced in size.

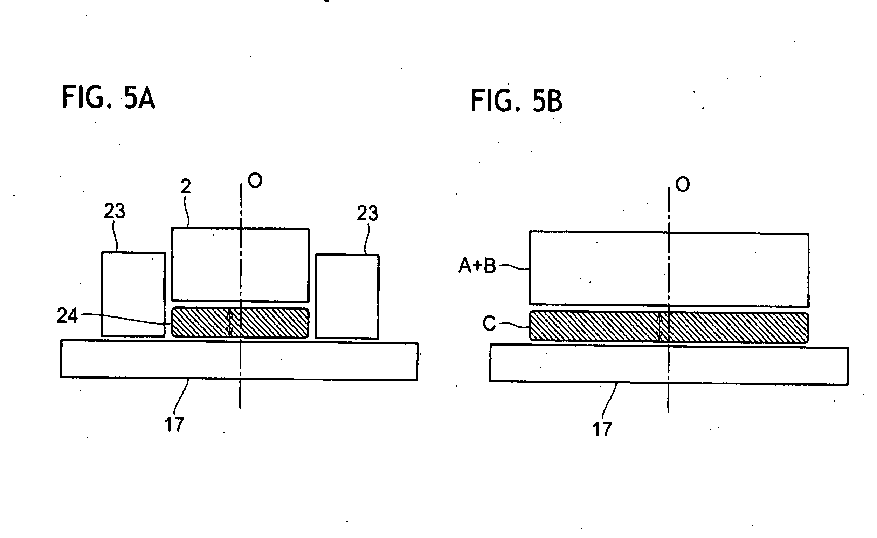

For example, Fig. 5B shows an imaging device of a comparative example in which a camera shake compensation mechanism A and an imaging optical system B are moved together in the optical axis direction. In this case, in order for the camera shake compensation mechanism A and the imaging optical system B to move in the optical axis direction, it is necessary to provide a clearance C. Therefore, a size reduction of the imaging device cannot be sufficiently achieved.

On the contrary, as shown in Fig. 5A, in the imaging device according to this embodiment, the third actuator 10 is provided for the moving member 5. Therefore, upon performing zooming or focusing, the slide member 11, the moving member 5, and the imaging optical system 2 are not moved together unlike the comparative example. Only the imaging optical system 2 is moved in the optical axis direction. As a result, the clearance 24 in the imaging device can be configured to be small in size. Thus, a size reduction of the imaging device can be achieved.

Also, according to the imaging device of this embodiment, the first actuator and the second actuator are disposed to form a T shape. Therefore, the driving portions of the first actuator and the second actuator can be disposed closely, and the members can be configured to be small in size. As a result, a size reduction of the imaging device can be achieved.

Here, the foregoing embodiment shows an example of the imaging device according to the invention. The imaging device according to the invention is not limited to the imaging device illustrated in this embodiment.

For example, in this embodiment, the mechanism in which the imaging optical system 2 is moved with respect to the imaging element 14 in response to the camera shake is explained as the camera shake compensation mechanism. However, the imaging element 14 may be moved with respect to the imaging optical system 2. Even in such a case, the similar advantages to those of the imaging device according to the above embodiment can be attained. Also, in this embodiment, the actuator using the piezoelectric element is employed as the actuator of the imaging device, but the actuator using another driving component such as a motor, or the like may be employed.

## Claims

1. An imaging device for making camera shake compensation by relatively moving an imaging optical system (2) and an imaging element (14) in directions perpendicular to an optical axis (O) direction, the imaging device comprising:
a first actuator (8) that moves the imaging optical system relatively to the imaging element in a first direction (x) perpendicular to the optical axis direction;
a second actuator (6) that moves the imaging optical system relatively to the imaging element in a second direction (y) which is perpendicular to the optical axis direction and which intersects the first direction; and
a moving member (5) that is moved in the first direction together with the imaging optical system, which is attached to the moving member by an action of the first actuator, and that is moved in the second direction together with the imaging optical system by an action of the second actuator;
**characterised by** a third actuator (10) that is attached to the moving member and that relatively moves the imaging optical system in the optical axis direction with respect to the moving member.

2. The imaging device according to claim 1, wherein the first actuator (8) and the second actuator (6) are disposed to form a T shape.

3. The imaging device according to any one of claims 1 to 2, wherein each of the first actuator (8), the second actuator (6), and third actuator (10) moves a shaft member (8b, 6b, 10b) reciprocally by an action of a piezoelectric element (8a, 6a, 10a).

## Patentansprüche

1. Abbildungsvorrichtung zum Durchführen einer Kompensation für Kameraerschütterungen durch relatives Bewegen eines optischen Abbildungssystems (2) und eines Abbildungselements (14) in Richtungen senkrecht zu einer optischen Achsenrichtung (O), wobei die Abbildungsvorrichtung umfasst:
einen ersten Aktuator (8), der das optische Abbildungssystem relativ zu dem Abbildungselement in einer ersten Richtung (x), senkrecht zu der optischen Achsenrichtung, bewegt;
einen zweiten Aktuator (6), der das optische Abbildungssystem relativ zu dem Abbildungselement in einer zweiten Richtung (y), welche senkrecht zu der optischen Achsenrichtung liegt und die erste Richtung schneidet, bewegt; und
ein Bewegungsglied (5), welches durch eine Tätigkeit des ersten Aktuators zusammen mit dem optischen Abbildungssystem, welches an dem Bewegungsglied angebracht ist, in die erste Richtung bewegt wird und welches durch eine Tätigkeit des zweiten Aktuators zusammen mit dem optischen Abbildungssystem in die zweite Richtung bewegt wird;
**gekennzeichnet durch**
einen dritten Aktuator (10) der mit dem Bewegungsglied verbunden ist und der bezüglich des Bewegungsgliedes das optische Abbildungssystem in der optischen Achsenrichtung relativ bewegt.

2. Abbildungsvorrichtung nach Anspruch 1, wobei der erste Aktuator (8) und der zweite Aktuator (6) so angeordnet sind, dass sie eine T-Form ausbilden.

3. Abbildungsvorrichtung nach einem der Ansprüche 1 bis 2, wobei jeder des ersten Aktuators (8), des zweiten Aktuators (6) und des dritten Aktuators (10) durch Tätigkeit eines piezolelektrischen Elements (8a, 6a, 10a) ein Schaftglied (8b, 6b, 10b) reziprok bewegt.

## Revendications

1. Dispositif de formation d'image destiné à assurer une compensation des tremblements de la caméra par un déplacement relatif d'un système optique de formation d'image (2) et d'un élément de formation d'image (14) dans des directions perpendiculaires à une direction d'axe optique (O), le dispositif de formation comprenant :
un premier actionneur (8) qui déplace le système optique de formation d'image de manière relative par rapport à l'élément de formation d'image dans une première direction (x) perpendiculaire à la direction d'axe optique ;
un deuxième actionneur (6) qui déplace le système optique de formation d'image de manière relative par rapport à l'élément de formation d'image dans une seconde direction (y) perpendiculaire à la direction d'axe optique et qui croise la première direction, et
un élément mobile (5) qui est déplacé dans la première direction conjointement avec le système optique de formation d'image fixé à l'élément mobile par une action du premier actionneur, et qui est déplacé dans la seconde direction conjointement avec le système optique de formation d'image par une action du deuxième actionneur;
**caractérisé par**
un troisième actionneur (10), qui est fixé à l'élément mobile et qui déplace de manière relative le système optique de formation d'image dans la direction d'axe optique par rapport à l'élément mobile.

2. Dispositif de formation d'image selon la revendication 1, dans lequel le premier actionneur (8) et le deuxième actionneur (6) sont disposés de manière à former un T.

3. Dispositif de formation d'image selon l'une quelconque des revendications 1 à 2, dans lequel chacun parmi le premier actionneur (8), le deuxième actionneur (6) et le troisième actionneur (10) déplace un élément formant arbre (8b, 6b, 10b) de manière réciproque sous l'action d'un élément piézoélectrique (8a, 6a, 10a).
